Europäisches Patentamt

European Patent Office

Office européen des brevets

(11) Publication number: **0 498 089 A1**

# EUROPEAN PATENT APPLICATION

(21) Application number: **91203263.8**

(22) Date of filing: **12.12.91**

(51) Int. Cl.5: **G11B 11/10**, G11B 5/66

(30) Priority: **21.12.90 NL 9002840**

(43) Date of publication of application:
**12.08.92 Bulletin 92/33**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Daalderop, Gerardus Henricus Otto**
**c/o INT. OCTROOIBUREAU B.V., Prof.**
**Holstlaan 6**
**NL-5656 AA Eindhoven(NL)**
Inventor: **Den Broeder, Friedrich Johannes**
**Ary**
**c/o INT. OCTROOIBUREAU B.V., Prof.**
**Holstlaan 6**
**NL-5656 AA Eindhoven(NL)**
Inventor: **Kerkhof, Johannes Martinus**
**c/o INT. OCTROOIBUREAU B.V., Prof.**
**Holstlaan 6**
**NL-5656 AA Eindhoven(NL)**
Inventor: **Janssen, Erik**
**c/o INT. OCTROOIBUREAU B.V., Prof.**
**Holstlaan 6**
**NL-5656 AA Eindhoven(NL)**
Inventor: **Kelly, Paul Joseph**
**c/o INT. OCTROOIBUREAU B.V., Prof.**
**Holstlaan 6**
**NL-5656 AA Eindhoven(NL)**
Inventor: **Zeper, Wouter Bastiaan**
**c/o INT. OCTROOIBUREAU B.V., Prof.**
**Holstlaan 6**
**NL-5656 AA Eindhoven(NL)**
Inventor: **Hoving, Willem**
**c/o INT. OCTROOIBUREAU B.V., Prof.**
**Holstlaan 6**
**NL-5656 AA Eindhoven(NL)**

(74) Representative: **Weening, Cornelis et al**
**INTERNATIONAAL OCTROOIBUREAU B.V.**
**Prof. Holstlaan 6**
**NL-5656 AA Eindhoven(NL)**

(54) **Magnetic medium.**

(57) The invention relates to a magnetic medium comprising a metallic multilayer having a perpendicular anisotropy. The multilayer is composed of layers containing Ni and layers containing a Co,Fe-alloy. Said layers are alternately stacked. The thickness of the Ni layers is less than 2.0 nm. The thickness of the Co,Fe-layers is less than 0.4 nm. Dependent on the overall thickness of the multilayer, the magnetic media according to the present invention can very suitably be used as recording medium for perpendicular magnetic recording or magneto-optical recording. By replacing a part of the Ni in the Ni layers, preferably 25-27 at.%, specific magnetic properties of the Ni, Co multilayers can be optimized.

EP 0 498 089 A1

The invention relates to a magnetic medium comprising a substrate of nonmagnetic material on which a metallic multilayer having a perpendicular magnetic anisotropy is provided. Such media can be used, in principle, in applications requiring plate-shaped magnetic media the direction of the magnetic moment of which extends transversely to the surface of the plate.

Magnetic media of the type mentioned in the opening paragraph are known per se. The known media are used mainly as magnetic recording media for the magnetic storage of data. In such recording media the direction of the magnetic moment extends perpendicularly to the plane of the recording layer. This permits a linear information density to be attained per unit length of a specific information track, which considerably exceeds that of the longitudinal recording media which have been known for some time. Due to this property, magnetic recording media having a perpendicular anisotropy are very suitable for the storage of digital information. The above-mentioned type of recording medium is used in both the so-called perpendicular magnetic recording and the so-called magneto-optical recording.

Thus, in EP 304,927 a magnetic recording medium for perpendicular magnetic recording is described the recording layer of which consists of a multilayer. Said multilayer is composed of layers of the nonmagnetic Pd (palladium) and/or Pt (platinum) and the magnetic Co (cobalt), the magnetic and the nonmagnetic layers being alternately provided. In the case of the known recording medium, a metallic intermediate layer is sometimes provided between the said Pt/Co or Pd/Co multilayer and the substrate. Said intermediate layer is provided to improve the coercive force $H_c$ (kA/m) and the rectangularity of the so-called MH-loop.

From EP 304,873 a magnetic recording medium for magneto-optical recording is known. The recording layer of this known recording medium also consists of a Pt/Co or Pd/Co multilayer. The metallic intermediate layer described in EP 304,873, which in a number of cases is provided between the multilayer and the substrate, serves to improve the magneto-optical properties.

The known magnetic media have the disadvantage that, inter alia, the saturation magnetisation $M_s$ (T) of the magnetic multilayers is insufficiently high for certain applications.

It is an object of the invention to provide a magnetic medium exhibiting a high saturation magnetisation. The media according to the invention must also have a relatively high perpendicular magnetic anisotropy.

These and other objects are achieved by a magnetic recording medium of the type mentioned in the opening paragraph, which is characterized in that the metallic multilayer is composed of layers containing predominantly Ni and of layers containing predominantly a Co,Fe-alloy, the composition of which corresponds to the formula $Co_{1-x}Fe_x$ ($0 < x < 0.6$), which layers are alternately provided, the maximum thickness of the Ni layers being less than 2.0 nm and the maximum thickness of the Co,Fe-layers being less than 0.4 nm.

Surprisingly, it has been found that a multilayer which is composed of alternately stacked layers of two different magnetic metals can nevertheless have a magnetic moment which extends perpendicularly to the surface of the multilayer. In this situation, the direction of magnetization was expected to extend parallel to the surface of the multilayer because the demagnetizing field in such a multilayer is relatively large. This presupposition is reinforced by the recent publication J. de Physique, 49 C8, Page 1769 (1988). In said publication a number of magnetic measurements on Co/Ni multilayers is described. At a constant thickness of the Ni layer (2.44 nm) and a varying thickness of the Co layer (0.2 - 2 nm) it was found that in all cases the direction of magnetization extended parallel to the plane of the multilayer.

The composition of the sublayers in the metallic multilayer of the magnetic medium according to the invention is important. Preferably, layers of pure Ni and layers of the pure Co,Fe-alloy are used. The addition of one or more other elements of the periodic system to the Ni and/or the Co,Fe-alloy may be favourable under certain conditions to influence specific properties of the magnetic medium. Such additions have the disadvantage, however, that they reduce, in particular, the saturation magnetization of the magnetic medium.

The specific composition of the Co,Fe-alloy also has a great influence on the saturation magnetization and on the perpendicular magnetic anisotropy. If the alloy contains only Co as the magnetic element ($x = 0$), magnetic media having a relatively high perpendicular magnetic anisotropy are obtained. Under these conditions, however, the degree of saturation magnetization is relatively low, namely approximately 1.0 T. When the Co,Fe-alloy contains relatively much Fe ($0.4 < x < 0.6$) a considerably higher saturation magnetization is attained, namely upto 1.5 T. Such magnetic media, however, have a relatively low perpendicular magnetic anisotropy. If the Co,Fe-alloy contains more than 60 at.% of Fe as the magnetic element ($x > 0.6$) no or no appreciable perpendicular anisotropy is obtained. Preferably, the magnetic medium according to the invention comprises sublayers of a Co,Fe-alloy containing 0-30 at.% of Fe as the magnetic element ($0.0 < x < 0.3$). When such an alloy is used a magnetic medium is obtained having the optimum combination of a high saturation magnetization and a high perpendicular magnetic anisotropy.

The thickness of the individual Ni and Co,Fe-layers is critical. It has been found that the Ni/Co,Fe-multilayer of the medium exhibits no perpendicular anisotropy when the thickness of the individual Co,Fe-layers is 0.4 nm or more, irrespective of the thickness of the Ni layers. On the other hand, it has been found that no perpendicular magnetization takes place either when the thickness of the individual Ni layers is 2.0 nm or more, irrespective of the thickness of the Co,Fe-layers. It has been found that magnetic media having Ni layers with a thickness of 0.4 nm and Co,Fe-layers with a thickness of 0.2 nm exhibit a maximum magnetic anisotropy.

A further embodiment of the magnetic medium according to the present invention is characterized in that a metallic nonmagnetic intermediate layer is provided between the substrate and the multilayer. If the multilayer of the recording layer has to be provided on a nonmetallic substrate, it appears that the perpendicular anisotropy can be further increased by the above measure. Glass, silicon or synthetic resins such as polyimide, polyamide, polycarbonate, polystyrene, polyethene and polyethylene terephtalate can be used as the nonmetallic substrate material. In particular noble metals can be used as the material for the metallic nonmagnetic intermediate layer. The best results are obtained by using an intermediate layer of Au. Intermediate layers of Cr or Ge were found to be ineffective.

The metallic intermediate layer and the multilayer can be provided on a substrate in known manner, for example, by sputtering or vacuum evaporation.

An interesting embodiment of the magnetic medium according to the invention is characterized in that the thickness of the magnetic multilayer ranges between 15 nm and 2000 nm. This embodiment is very suitable for use as the magnetic recording layer in perpendicular magnetic recording in which a magnetic head is used to write or read information in a recording medium on the basis of magnetic induction. The magnetic head may be in contact with said medium. Contactless perpendicular magnetic recording, as takes place in rigid disks, is also possible with the magnetic media according to the invention.

When the inventive multilayers are used for perpendicular magnetic recording, the coercive force Hc is found to be too low under certain circumstances. This advantage can be overcome by replacing a part of the Ni in the multilayer, preferably up to 75 at.%, by Pd. By virtue of this measure Hc is increased considerably.

Further, it has been found that the use of thick recording media for perpendicular recording leads to a decrease of the perpendicular anisotropy because it causes the stacking of the recording multilayer to take place in a disorderly manner. To preclude this it has been found advantageous to provide nonmagnetic metallic nucleation layers in the multilayer. Said nucleation layers should have a minimum thickness of 1.0 nm. Suitable results are obtained with nucleation layers of Au or Cu.

Another advantageous embodiment of the magnetic medium according to the invention is characterized according to the invention in that the thickness of the magnetic multilayer is below 25 nm. This specific embodiment is optimally suited for use as a magnetic recording element in magneto-optical recording. It has been found that a 100% remanence ($M_r/M_s = 1$) is obtained when the thickness of the recording layer is less than 25 nm. The thickness of the magnetic multilayer is preferably 10-20 nm.

When the inventive multilayers are used for magneto-optical recording, the Curie temperature of the Ni, Co multilayers (Tc: 720°C) according to the invention is found to be on the high side. This disadvantage can be overcome by replacing a part of the Ni in the Ni layers, preferably up to 75 at.%, by Pd. When more than 75 at.% is replaced the saturation magnetisation drops to an unacceptably low level.

Aspects of the invention will be described in greater detail by means of exemplary embodiments and with reference to the accompanying drawing, in which

Figure 1 shows a part of a radial section (not drawn to scale) of a magnetic medium according to the invention which is to be used as a recording medium in perpendicular magnetic recording.

Figure 2 shows the MH-curve of a magnetic medium shown in Figure 1.

Figure 3 shows a part of a radial section (not drawn to scale) of a magnetic medium according to the invention which is to be used as a recording medium in magneto-optical recording.

Figure 4 shows a curve in which the Kerr-rotation is plotted as a function of the applied magnetic field in a magneto-optical recording element according to the invention.

Figure 5 shows the anisotropy energy ($K_{eff}$) per volume unit of a number of magnetic media, plotted as a function of the Fe content in the Co,Fe sublayers.

Exemplary embodiments

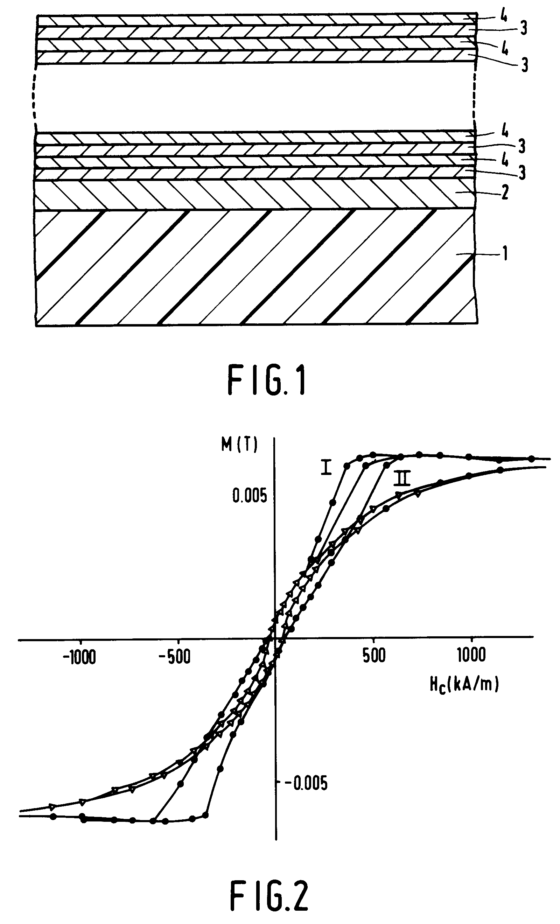

Figure 1 is a sectional view of a magnetic medium according to the invention for use as a recording medium in perpendicular magnetic recording. Reference numeral 1 denotes a disk-shaped nonmagnetic substrate which consists of glass. It is alternatively possible to use other, non flexible disk-shaped substrates such as silicon or polycarbonate. Disk-shaped or tape-shaped substrates of a flexible material, such as polyester, polyimide or polyamide can also be used.

A metallic intermediate layer 2 of Au is applied to substrate 1. The thickness of said layer is approximately 100 nm. Said intermediate layer, which serves as a nucleation-enhancing layer for the recording layer to be applied at a later stage, must have a minimum thickness of 20 nm to perform this function. The actual recording layer in the form of a Co/Ni multilayer is present on intermediate layer 2. Said recording layer is composed of a number of layers 3 of Ni and a number of layers 4 of Co, which are alternately provided. The thickness of the individual Ni layers is below 2 nm. The thickness of the individual Co layers is below 0.4 nm. The overall thickness of the multilayer is approximately 15-2000 nm. If the magnetic recording medium according to the invention is in the form of a flexible tape, it may be advantageous to provide a protective layer (not shown) on the surface of the multilayer facing away from the substrate to preclude damage to a magnetic head. The flexible substrate 1 may also be provided with an additional bottom layer (not shown) on the side facing away from the multilayer to improve the running properties of the recording medium.

The above-described magnetic recording medium exhibits surprisingly good qualities when it is used in perpendicular magnetic recording, such as a sufficiently high saturation magnetization and a high information density. In this application, a magnetic head through which a modulated signal is sent is used to write or read information in the recording medium.

Figure 2 shows the MH-loops of a magnetic recording medium according to the invention for use in perpendicular magnetic recording. Said loops are measured parallel (11) and perpendicularly (1) to the direction of magnetization. The present medium was composed of a silicon substrate, an approximately 100 nm thick intermediate layer of Au and a 150 nm thick recording layer in the form of a multilayer. Said multilayer was composed of alternately stacked Ni layers (thickness 0.4 nm) and Co layers (thickness 0.2 nm). The saturation magnetization was 1.0 T. The coercive force was 44 kA/m. Comparable results were obtained on a flexible substrate such as polyester.

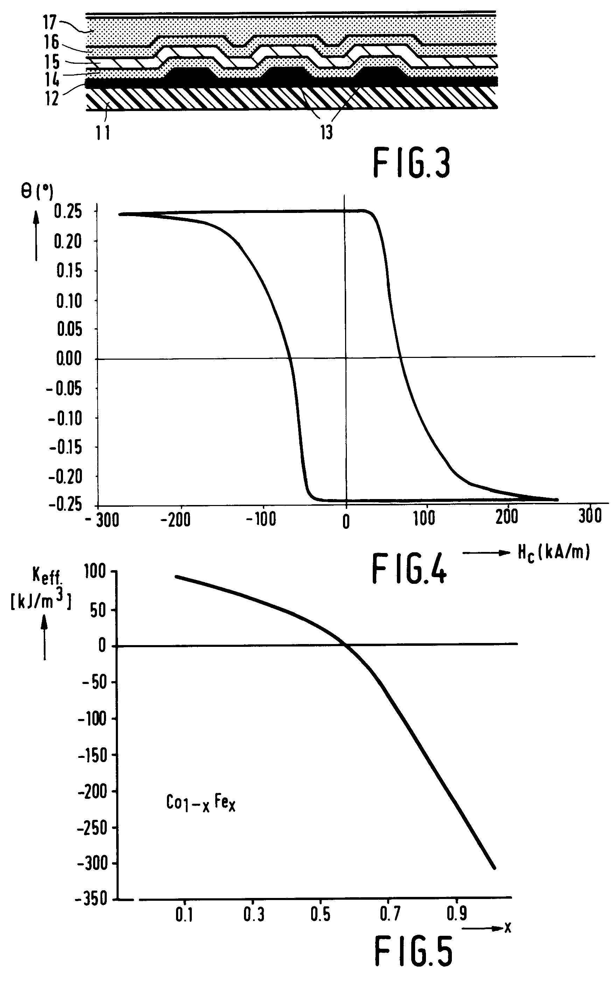

Figure 3 shows a magnetic recording medium (air incident) according to the invention for use in magneto-optical recording. The glass substrate 11 having a diameter of 5 inch is provided with a layer 12 of a photopolymerisable lacquer on the basis of acrylates. Layer 12 is provided with a radial servotrack on the side facing away from the substrate 11. The servotrack contains control information in the form of optically readable information bits 13. A sputtered dielectric layer 14 of, for example, A1N is applied to layer 12. In the present case, layer 14 is provided with an intermediate layer 15 of Au. Said intermediate layer is used to increase the intended perpendicular magnetization of the multilayer.

The actual recording layer in the form of a vacuum-evaporated multilayer 16 is present on intermediate layer 15. Said multilayer is composed of alternately stacked Ni layers (thickness below 2.0 nm) and Co layers (thickness below 0.4 nm). The overall thickness of the multilayer was 12 nm. A protective layer 17 of a photopolymerizable lacquer is present on the recording layer. If desired, a dielectric layer of A1N may be provided between layers 16 and 17.

In Figure 4 the Kerr-rotation $\theta$ (°) is plotted as a function of the applied magnetic field H (kA/m) of a magnetic recording medium according to the invention for use in magneto-optical recording. The recording medium was composed of a glass substrate, a 100 nm thick intermediate layer of Au and a recording layer. The 12 nm thick recording layer was composed of 20 sublayers of Co (thickness 0.2 nm) and 20 sublayers of Ni (thickness 0.4 nm) which were alternately stacked. By using this magneto-optical recording medium a remanence of nearly 100% ($M_r/M_s r = 1$) was attained. A $M_r/M_s$-ratio of 1 is an essential requirement to be met by magnetic recording media if they are to be suitable for use in magneto-optical recording. When the overall layer thickness was selected below 12 nm, a 100% remanence was obtained all the time. In the present case the Kerr-rotation was 0.25°. The coercive force was 67 kA/m.

In another experiment in which a magnetic medium was used a 50 nm thick intermediate layer of Au was applied to a substrate of mica. Said intermediate layer was provided with a 12 nm thick Co/Ni multilayer. The magnetic multilayer was composed of alternately stacked layers of Co (layer thickness 0.2 nm) and Ni (layer thickness 0.4 nm). A coercive force ($H_c$) of 166 kA/m was measured for this magnetic medium.

In Figure 5 the anisotropy-energy $K_{eff}$ (kJ) per volume unit ($m^3$) of a number of magnetic media is plotted as a function of the composition of the Co,Fe-alloy. The measured media were composed of a substrate of glass, a 20 nm thick intermediate layer of Au and a magnetic multilayer. The 12 nm thick multilayer consisted of alternately stacked layers of Co (layer thickness 0.2 nm) and Ni (layer thickness 0.6 nm). The Fe-content of the various media varied from 0-100 at.%. It is apparent from Figure 5 that at a Fe-content in excess of 60 at.% (x > 0.6) no perpendicular anisotropy is obtained. In that case the value of $K_{eff}$ is negative.

The effect of replacing a part of the Ni by Pd in the multilayers according to the invention was examined in a number of Co, Ni multilayers in which 0, 25, 50 or 75 at.% of the Ni in the Ni sublayers was replaced by Pd. Said multilayers were applied to an underlayer of Au or Pd. Table 1 gives the composition of the examined multilayers and a few magnetic properties.

TABLE 1

| | $\mu_o M_R$ (T) | $H_c$ (kA/m) |
|---|---|---|
| 20 nm Au + 30(0.2nmCo + 0.46nmNi) | 1.0 | 42 |
| 50 nm Pd + 30(0.2nmCo + 0.46nmNi$_{75}$Pd$_{25}$) | 1.0 | 57 |
| 50 nm Pd + 30(0.2nmCo + 0.46nmNi$_{50}$Pd$_{50}$) | 1.0 | 91 |
| 50 nm Pd + 30(0.3nmCo + 0.46nmNi$_{25}$Pd$_{75}$) | 1.3 | 81 |

Table 1 shows that Hc increases considerably when a part, in particular up to 75 at.%, of the Ni is replaced by Pd. By virtue thereof, the Pd-substituted multilayers can particularly suitably be used in perpendicular magnetic recording.

In a number of further experiments the effect of nucleation layers on the magnetic properties of relatively thick Ni, Co multilayers was examined. For this purpose, a number of multilayers was manufactured on a 50 nm thick underlayer of Au, the individual Ni layers and Co layers having a thickness of 0.4 nm and 0.2 nm, respectively. One nucleation layer of Cu was applied to every 10 double layers of Co, Ni (thickness 0.6 nm). Each multilayer comprised 10 nucleation layers of the same thickness.

Various multilayers were manufactured comprising Cu layers of varying thicknesses, i.e. 0, 2, 5 or 10 nm. Table 2 gives a number of magnetic properties of said multilayers.

TABLE 2

| t (nm) | K (KJ/m$^3$) | $M_R/M_S$ (%) | $H_c$ (kA/m) |
|---|---|---|---|
| 0 | 170 | 14 | 45 |
| 2 | 210 | 16 | 47 |
| 5 | 340 | 21 | 57 |
| 10 | 330 | 27 | 61 |

The Table shows that the anisotropy-energy per unit of volume (K) increases with the thickness of the nucleation layers. Besides, also the remanence ($M_R/M_S$; in %) and the coercive force $H_c$ (kA/m) exhibit an increase.

In a further exemplary embodiment a glass substrate was provided with a 50 nm thick intermediate layer of Au. To said intermediate layer a 12 nm thick recording layer was applied in the form of a Ni/Co multilayer. Said multilayer was composed of 0.2 nm thick Co layers and 0.4 nm thick Ni layers which were alternately stacked. In a number of thermomagnetic recording experiments, domains (bits) were written in said recording medium. The recording field was 25 kA/m. The wavelength of the laser light used was 488 nm. The recording power was varied between 25 and 65 mW. Under these conditions domains having a section of 0.8 and 1.5 micrometer, respectively, were obtained.

**Claims**

1. A magnetic medium comprising a substrate of nonmagnetic material on which a metallic multilayer having a perpendicular magnetic anisotropy is provided, characterized in that the metallic multilayer is composed of layers containing predominantly Ni and of layers containing predominantly a Co, Fe-alloy, the composition of which corresponds to the formula $Co_{1-x}Fe_x (0 < x < 0.6)$, which layers are alternately provided, the maximum thickness of the Ni layers being less than 2.0 nm and the maximum thickness of the Co,Fe-layers being less than 0.4 nm.

2. A magnetic medium as claimed in Claim 1, characterized in that the thickness of the Ni layers is 0.4 nm and the thickness of the Co,Fe-layers is 0.2 nm.

**3.** A magnetic medium as claimed in Claim 1 or 2, characterized in that a metallic nonmagnetic intermediate layer is provided between the substrate and the multilayer.

**4.** A magnetic medium as claimed in Claim 3, characterized in that the metallic intermediate layer consists of Au.

**5.** A magnetic medium for use as a recording medium in perpendicular magnetic recording, as claimed in one of the preceding Claims, characterized in that the thickness of the magnetic multilayer ranges between 15 nm and 2000 nm.

**6.** A magnetic medium as claimed in Claim 5, characterized in that a substantial part of the Ni, preferably up to 75 at.%, is replaced by Pd.

**7.** A magnetic medium as claimed in Claim 5 or 6, characterized in that the multilayer comprises a number of nonmagnetic metallic nucleation layers.

**8.** A magnetic medium for use as a recording medium in magneto-optical recording, as claimed in one of the Claims 1-4, characterized in that the thickness of the multilayer is less than 25 nm.

**9.** A magnetic medium as claimed in Claim 8, characterized in that a substantial part of the Ni, preferably up to 75 at.%, is replaced by Pd.

FIG.1

FIG.2

**FIG.3**

**FIG.4**

**FIG.5**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | JOURNAL DE PHYSIQUE, COLLOQUE C8, SUPPLEMENT TO NO. 12<br>vol. 49, December 1988,<br>pages 1769 - 1770;<br>H.P.M. LUYKX ET AL.: 'Ferromagnetic resonance experiments on Co/Pd, Co/Ni and Fe/Pd multilayers'<br>* page 1769, left column, paragraph 1 *<br>* page 1170, left column, paragraph 1 - right column, paragraph 3 *<br>--- | 1,5 | G11B11/10<br>G11B5/66 |
| A | DE-A-4 017 999 (SIEMENS AG) 20 December 1990<br>* column 5, line 8 - line 25 *<br>* claim 1 *<br><br>----- | 1-4,8 | |
| | | | TECHNICAL FIELDS SEARCHED (Int. Cl.5)<br><br>G11B |

The present search report has been drawn up for all claims

| Place of search | Date of completion of the search | Examiner |
|---|---|---|
| THE HAGUE | 03 MARCH 1992 | KLOCKE S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)